Europäisches Patentamt

European Patent Office

Office européen des brevets

(11) Publication number: **0 053 634**
**B1**

(12) EUROPEAN PATENT SPECIFICATION

(45) Date of publication of patent specification: **03.07.85**

(21) Application number: **80107747.0**

(22) Date of filing: **09.12.80**

(51) Int. Cl.⁴: **F 16 B 5/04,** F 16 B 19/08

(54) **Fastener assembly.**

(43) Date of publication of application:
**16.06.82 Bulletin 82/24**

(45) Publication of the grant of the patent:
**03.07.85 Bulletin 85/27**

(84) Designated Contracting States:
**DE FR GB SE**

(56) References cited:
**DD-A-136 171**
**FR-A-2 049 334**
**GB-A-1 178 655**
**US-A-4 127 345**

(73) Proprietor: **The B.F. GOODRICH Company
Dept. 0015 WHB-6 500 South Main Street
Akron, Ohio 44318 (US)**

(72) Inventor: **Shackelford, James Russell
225 Lincoln Avenue
Cuyahoga Falls Ohio 44221 (US)**

(74) Representative: **von Kreisler, Alek, Dipl.-Chem.
et al
Deichmannhaus am Hauptbahnhof
D-5000 Köln 1 (DE)**

EP 0 053 634 B1

Courier Press, Leamington Spa, England.

## Description

The invention refers to a fastener assembly for coupling an exterior wall constituting an aircraft wing cover or the like to an interior wall constituting the substructure of the wing cover or the like through an aperture extending through both walls to create a tight connection, including:

a metal tubular rivet having an external open end flared for being received within a countersunk area at the exterior surface of the aperture, said rivet having an exterior surface of a diameter slightly smaller than the aperture in which said fastener assembly is to be positioned, said rivet having an interior surface with threads to permit bucking of the rivet from its external open end,

and an insertion member having an exterior surface of a dimension greater than the corresponding dimension of the interior surface of said rivet, which member is insertable into said rivet from the external open end to force the exterior surface of said rivet outwardly against the walls of the aperture, said insertion member being formed of a relatively non-deformable material compared to the malleable material from which said rivet is formed.

A known fastener assembly of this kind is described in FR—A—2 049 334. For fastening of two walls of a structure, a hollow rivet is used which is internally threaded. Use of an associated tool permits bucking of the rivet through the aperture from the non-blind side. After the bucking has been finished, a conical plug is urged into the hollow rivet. To avoid that the conical plug is pushed back by the radial stresses acting between said plug and the rivet, the plug is anchored to the rivet by a separate anchoring means or by a special deformation.

It is the object of the invention to provide a fastener assembly which in a simple way provides a fluid-tight fit of the rivet within the aperture of the sheet materials.

To solve this problem, the fastener assembly of the invention is characterized in that said insertion member is a cylindrical tubular sleeve having an exterior surface of a diameter slightly greater than the interior diameter of said rivet so that the insertion of said sleeve into said rivet creates a coupling fluid-seal between said rivet and the walls forming said aperture, said rivet having a closed inner end and the outer end of said sleeve when inserted in said rivet being in a position intermediate the exterior wall.

The present invention is directed to a fastener assembly tubular rivet similar to that known in the prior art but with the improved fastener assembly including a cylindrical sleeve of relatively non-deformable material. The cylindrical member may be force-fitted into the tubular rivet after bucking of the tubular rivet to the sheet materials being coupled. The non-deformable sleeve will force the entire contacted surface area of the tubular rivet radially outwardly against the sheet material to thereby make a complete interference fit in contact with the face of the aperture in the sheets of material being coupled. Leakage from across the coupled members can thus be precluded. In this fashion, chipping, marring, or other abrasion of the inner surface of the sheet material being coupled will not destroy the fluid-tight capabilities. Further, since there is no washer required adjacent the external surface of the sheet material, leakage from the breakage or other deformation of the washer caused by its movement is also precluded.

In order to gain a better understanding of the invention as well as other advantages and further features thereof, reference is made to the following detailed description of the invention to be read in conjunction with the accompanying drawings and claims which form a part of this application.

Figure 1 is an enlarged sectional illustration of the fastener assembly including the tubular rivet, the internal cylinder and a screw constructed in accordance with the instant invention shown as holding together two sheets of apertured material and with parts broken away to show internal constructions thereof and

Figures 2—5 are sectional views of the fastener assembly of Figure 1 in various states of utilization and also showing an installing tool bucking the rivet and inserting the cylinder.

As shown in the figures, the fastener assembly 10 includes a tubular shaped rivet 12 illustrated in the preferred embodiment as a tubular member having a shoulder 14 at the exterior end 16 and being closed by a face 18 at the interior end 20. The rivet may be stepped at a central portion 22 for weight reduction thus leaving relatively thinner walls adjacent the area to be deformed through bucking. The interior end is preferably closed whereby the rivet may be utilized for holding together sheet material in a fluid-tight orientation. The external edge is flanged with a shoulder 14 to define the limits into which the rivet may be inserted into a wall aperture 24 such as sheets of metal 26 and 28 or other material with particular utility in securing an aircraft wing cover to its substructure. Such shoulder is shaped to mate with a counterbored portion 30 adjacent the external surface of the exterior sheet 26 of the material to which the rivet is fastened.

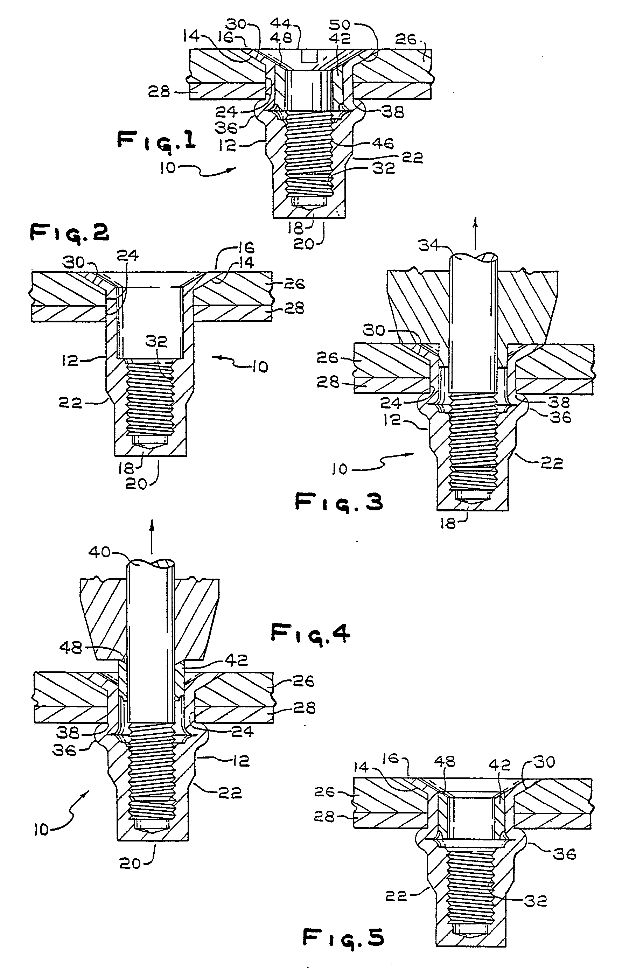

Threads 32 are provided in the internal cylindrical surface adjacent the internal end of the rivet to assist in bucking the rivnut from the external side of operation as shown in Figure 3. The rivet can be constructed of any of the conventional materials which have been utilized in the commercially available threaded rivets of the past such as those described in US—A—2 149 199. Such materials include stainless steel, steel, brass or aluminum.

Figure 2 of the drawings shows the rivet in a sectional view located in a wall aperture 24 of sheet material 26 and 28 which are being coupled. Shown in Figure 3 is the bucking operation whereby a first tool 34 is threaded into the internal threads of the rivet and pulled upwardly as shown in Figure 3 towards the external end of the rivet whereby a bulb portion 36 is created internal of the sheets, to cooperate with the interior edge 38 of the wall aperture 24 to create the coupling. Unscrewing of the tool 34 from the rivet creates the bucked rivet capable of holding the parts together in normal operation.

A second tool 40 is shown in Figure 4 and is adapted to be threaded into the secured rivet for applying pressure and force fitting a cylindrical sleeve 42 into the rivet. The sleeve is preferably constructed of a relatively nondeformable material such as a hardenable steel or alloy thereof such as a precipitation hardenable stainless steel, a material less deformable than that of the rivet. Upon being forced into the secured rivet, the rivet walls will be forced outwardly where contacted by the rivet so that all surface area of the rivet in contact with the sheet material will be tightly secured and form fitted with the wall aperture to create a fluid-tight seal between the sheet material and rivet. The rivet is of particular utility where the coupled material is a composite material which normally would be degraded at the hole edge by the bucking of the rivet if thicker rivet walls were employed. The present invention thus minimizes degradation of the composite material around the inner edge of the hole edge during bucking of the rivet.

Removal of the tool 42 makes the fastener assembly ready for operation with the sheet material coupled and a fluid-tight seal created.

The illustrated embodiment is described as utilizing two separate tools for first bucking the rivet then inserting the sleeve. It should be realized that a single tool could be utilized where a single stroke effects both results.

It is preferred to then provide a hole filler such as a screw 44 into the opening of the rivet with its thread 46 mating with the threads 32 of the rivet thus filling up the space and creating a substantially smooth surface of the materials being joined. Such surface is smooth except for the existence of the slit in the head of the screw for applying it into the rivet.

As can be understood, the exterior diameter of the sleeve 42 must be of a dimension slightly larger than the inner diameter of the rivet 12 at the area of common length. The sleeve must preferably extend into the rivet to a distance equal to the thickness of the surface of the metal sheets being joined. The external surface of the sleeve is preferably tapered at 48 for receiving the tapered inner face 50 of the screw 44.

The external surface of the rivet 12, at least exterior of the central portion 22, should have a diameter slightly less than the diameter of the hole in the sheet material to which it is to couple. By way of example, the wall aperture is 0.281 ± 0.0005 inch (7,15 ± 0,00127 mm) in diameter with the exterior surface of the upper portion of the rivet being 0.2795 ± 0.0005 inch (7,10 ± 0,0127 mm). A sleeve with an external surface diameter of 0.2440 ± 0.0005 in (6,20 ± 0,0127 mm) would create the proper functioning of the elements of the assembly of the instant invention if the inner diameter of the upper portion of the rivet were 0.2375 ± 0.0015 inch (6,03 ± 0,037 mm). The interference fit will make the rivet resistant to turning, a high torque interface between the fastener and fastened parts.

As can be understood from the above description, the force fit of the sleeve into the rivet will expand the external surfaces of the rivet into a fluid-tight seal. The fastener assembly can thus find particular utility in the aircraft industry, specifically in the mounting of the outer wing cover to the substrate of a wing filled with fluid fuels. The fastener assembly can obviously be used over a wide variety of coupling operations beyond that described above.

## Claims

1. A fastener assembly for coupling an exterior wall (26) constituting an aircraft wing cover or the like to an interior wall (28) constituting the substructure of the wing cover or the like through an aperture (24) extending through both walls to create a tight connection, including:

a metal tubular rivet (12) having an external open end (16) flared for being received within a countersunk area (30) at the exterior surface of the aperture (24), said rivet having an exterior surface of a diameter slightly smaller than the aperture in which said fastener assembly is to be positioned, said rivet (12) having an interior surface with threads (32) to permit bucking of the rivet from its external open end,

and an insertion member having an exterior surface of a dimension greater than the corresponding dimension of the interior surface of said rivet, which member is insertable into said rivet (12) from the external open end (16) to force the exterior surface of said rivet outwardly against the walls of the aperture, said insertion member being formed of a relatively nondeformable material compared to the malleable material from which said rivet (12) is formed,

characterized in that said insertion member is a cylindrical tubular sleeve (42) having an exterior surface of a diameter slightly greater than the interior diameter of said rivet so that the insertion of said sleeve (42) into said rivet (12) creates a coupling fluid-seal between said rivet and the walls forming said aperture, said rivet (12) having a closed inner end (18) and the outer end of said sleeve (42) when inserted in said rivet (12) being in a position intermediate the exterior wall (26).

2. The fastener assembly as set forth in claim 1 and further including a screw (44) mountable within said rivet (12) and said sleeve (42).

## Revendications

1. Un élément d'assemblage pour relier une paroi extérieure (26) constituant une couverture d'aile d'avion ou analogue à une paroi intérieure (28) constituant la structure inférieure de la couverture d'aile ou analogue par l'intermédiaire d'une ouverture (24) traversant les deux parois afin de créer une liaison étanche comprenant:

Un rivet tubulaire métallique (12) ayant une extrémité ouverte externe (16) évasée pour être reçue dans une zone contre-alésée (30) sur la surface extérieure de l'ouverture (24), ledit rivet ayant une surface extérieure d'une diamètre légèrement plus faible que celui de l'ouverture dans laquelle l'élément d'assemblage doit être positionné, ledit rivet (12) ayant une surface interne avec des filets (32) pour permettre l'écrasement dudit rivet par traction à partir de son extrémité externe ouverte.

et un élément d'insertion ayant une surface extérieure d'une dimension supérieure à la dimension correspondante de la surface intérieure dudit rivet, lequel élément est insérable dans ledit rivet (12) à partir de l'extrémité ouverte externe (16) pour pousser la surfacer extérieure dudit rivet vers l'extérieur contre les parois de l'ouverture, ledit élément d'insertion étant constitué d'une matière relativement non déformable comparativement à la matière malléable à partir de laquelle ledit rivet (123) est formé,

caractérisé en ce que ledit élément d'insertion est un manchon tubulaire cylindrique (42) ayant une surface extérieure d'une diamètre légèrement supérieur au diamètre intérieur dudit rivet si bien que l'insertion dudit manchon (42) dans ledit rivet (12) crée une liaison étanche au fluide entre ledit rivet et les parois formant ladite ouverture, ledit rivet (12) ayant une extrémité interne (18) fermée et l'extrémité externe dudit manchon (42) lorsqu'elle est insérée dans ledit rivet (12) étant dans une position entre la paroi extérieure (26).

2. L'élément d'assemblage selon la revendication 1 comprenant en outre:

une vis (44) pouvant être montée dans ledit rivet (12) et ledit manchon (42).

## Patentansprüche

1. Befestigungsvorrichtung zum Kuppeln einer aus der Haut eines Flugzeugflügels o.dgl. bestehenden Außenwand (26) mit einer die Unterstruktur der Flügelhaut o.dgl. bildenden Innenwand (28) durch eine Öffnung (24), die sich durch beide Wände erstreckt, zur Schaffung einer dichten Verbindung, mit

einem metallischen rohrförmigen Niet (12), der ein aufgeweitetes offenes Ende (16) aufweist, welches innerhalb eines Versenkbereichs (30) an der Außenfläche der Öffnung (24) aufnehmbar ist, wobei der Niet eine Außenfläche aufweist, deren Durchmesser geringfügig kleiner ist als die Öffnung, in der die Befestigungsvorrichtung anzubringen ist, und der Niet (12) eine Innenfläche mit Gewinde (32) aufweist, die das Ausbauchen des Niets von dessen äußerem offenen Ende aus ermöglicht,

und einem Einsatzteil, dessen Außenfläche in ihrer Abmessung größer ist als die entsprechende Abmessung der Innenfläche des Niets und das in den Niet (12) von äußeren offenen Ende (16) her einsetzbar ist, um die Außenfläche des Niets gegen die Wände der Öffnung nach außen zu treiben, wobei das Einsatzteil aus einem Material besteht, das im Vergleich zu dem dehnbaren Material, aus dem der Niet (12) gebildet ist, relativ unverformbar ist,

dadurch gekennzeichnet, daß das Einsatzteil eine zylindrische rohrförmige Hülse (42) ist, deren Außenfläche einen Durchmesser hat, der geringfügig größer ist als der Innendurchmesser des Niets, so daß das Einsetzen der Hülse (42) in den Niet (12) eine fluiddichte Kupplung zwischen dem Niet und den die Öffnung bildenden Wänden bewirkt, und daß der Niet (12), der ein geschlossenes inneres Ende (18) aufweist, und das äußere Ende der in den Niet (12) eingesetzten Hülse (42) an einer Stelle im Innern der Außenwand (26) angeordnet sind.

2. Befestigungsvorrichtung nach Anspruch 1, ferner enthaltend

eine im Innern des Niets (12) und der Hülse (42) montierbare Schraube (44).

**Fig.1**

**Fig.2**

**Fig.3**

**Fig.4**

**Fig.5**